# EUROPÄISCHE PATENTSCHRIFT

(11) **EP 0 553 401 B1**
(45) Veröffentlichungstag und Bekanntmachung des Hinweises auf die Patenterteilung: **11.01.1995**
(21) Anmeldenummer: 92117492.6
(22) Anmeldetag: 14.10.1992
(51) Int. Cl.: A01N 1/02

(54) **Perfusionseinrichtung**
Perfusion apparatus
Dispositif de perfusion

(30) Priorität: 18.01.1992 DE 4201258
(43) Veröffentlichungstag der Anmeldung: 04.08.1993
(73) Patentinhaber: HUGO SACHS ELEKTRONIK, 79232 March (DE)
(72) Erfinder: Zink, Roger, F-Widensolen (FR); Heiny, Ottmar, W-7801 Reute (DE); Rösch, Rudolf, W-7806 March (DE); Steiert, Hermann, W-7806 March (DE)
(74) Vertreter: Charrier, Rolf, Dipl.-Ing.

(56) Entgegenhaltungen:
- WO-A-88/05261
- WO-A-91/14364
- US-A- 5 051 352
- MEDIZINTECHNIK Bd. 23, Nr. 1, 1983, BERLIN, DD Seiten 2 - 5 D.SCHOLTZ ET. AL. 'Organkonservierungsmaschine OKM82'
- "Das isolierte perfundierte Warmblüter-Herz nach Langendorff" von H.J. Döring und H. Dehnert (Biomesstechnik-Verlag March GmbH, 1985) Seiten 1 bis 4 und 17 bis 27 (Dokument D1)

## Beschreibung

Die Erfindung betrifft eine Perfusionseinrichtung nach dem Oberbegriff des Anspruchs 1.

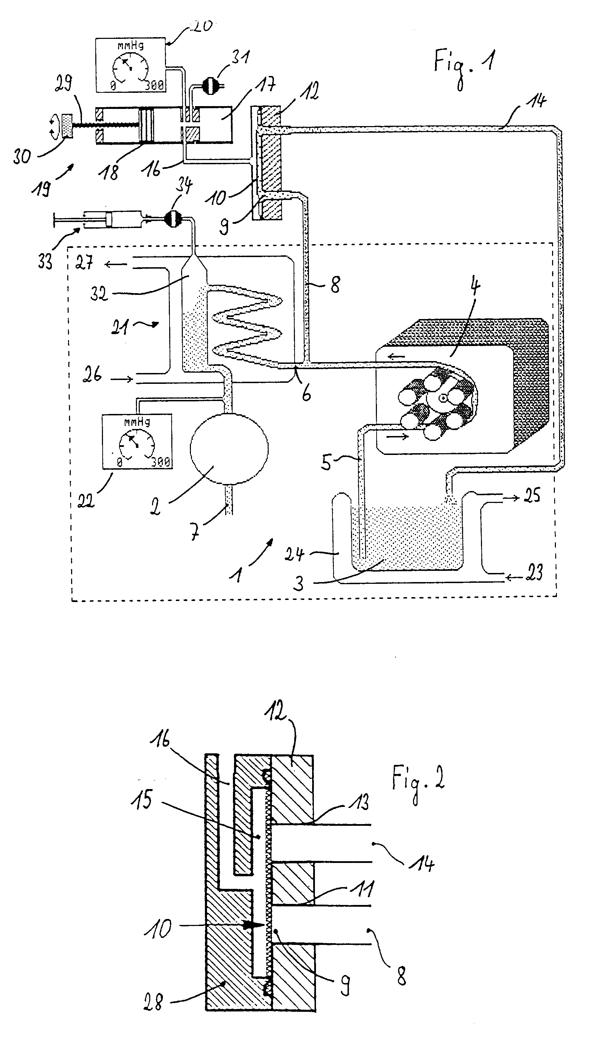

Eine solche Perfusionseinrichtung wird beschrieben in der Abhandlung _{"}Das isolierte perfundierte Warmblüter-Herz nach Langendorff" von H.J. Döring und H. Dehnert (Biomeßtechnik- Verlag March GmbH, ISBN 3-924638-04-7, 1985). Der in der Figur 1 der Zeichnungen gestrichelt umrandete Bereich stellt eine solche Perfusionseinrichtung dar. Sie besteht im wesentlichen aus einem Reservoir 3, einer Pumpe 4, einem Wärmeaustauscher 21 und einer Aufnahme für das isolierte, zu perfundierende Organ 2. Vom Reservoir 3 führt eine Saugleitung 5 zur Pumpe 4, welche nach der Pumpe 4 als Versorgungsleitung 6 über den Wärmeaustauscher 21 zum Organ 2 führt. Nach der Perfusion des Organs 2 verläßt das Perfusat dieses über eine Ablaufleitung 7.

Eine solche Vorrichtung dient der biomedizinischen Untersuchung von in vivo blutdurchflossenen Organen, welche durch die ständige Perfusion, beispielsweise mit einer sauerstoffhaltigen Nährlösung, bei nahezu physiologischen Bedingungen mit den verschiedensten experimentellen Methoden in vitro untersucht werden können. Dazu wird das zu untersuchende Organ 2 nach der Sektion in eine Aufnahmevorrichtung eingebracht und mit der Versorgungsleitung 6 (_{"}Arterie") und der Ablaufleitung 7 (_{"}Vene") verbunden. Mit Hilfe des Wärmeaustauschers 21 und eines beheizbaren Reservoirs 3 kann das Perfusat auf beliebiger Temperatur, üblicherweise im physiologischen Bereich, gehalten werden. Die Durchflußrate durch das Organ 2 läßt sich über die Förderleistung der Pumpe 4 einstellen. Um den effektiven Perfusionsdruck des Organs 2 zu messen, kann in der Versorgungsleitung 6, unmittelbar vor dem Organ 2, ein Manometer 22 bzw. ein Druckaufnehmer angebracht sein.

Die beschriebene Vorrichtung eignet sich nur für Messungen unter der sogenannten Konstant-Fluß-Bedingung, da über die Förderleistung der Pumpe 4 nur der Durchfluß einstellbar ist. Der sich dabei ergebende Druck hängt von den Eigenschaften des Organs 2 und deren Veränderungen während der Messungen ab. Während langsame Druckänderungen, abgelesen am Manometer 22, noch über die Fördermenge der Pumpe 4 manuell korrigierbar sind, ist dies bei schnellen Druckänderungen nicht möglich.

Um ein Arbeiten bei konstantem Druck zu ermöglichen, bedient man sich in vielen Labors anstelle des Reservoirs 3 und der Pumpe 4 hoher Flüssigkeitssäulen. Die Flüssigkeitssäule dient gleichzeitig als Reservoir und hydrostatischer Druckerzeuger. Der Flüssigkeitsspiegel in ihr wird durch einen Überlauf auf konstanter Höhe gehalten.

Solche Flüssigkeitssäulen sind sehr hoch und sperrig und lassen sich schlecht oder gar nicht auf einen bestimmten Druck justieren. Um beispielsweise einen Druck von 100 mmHg zu erzeugen, muß eine Nährlösungs-Stauhöhe von 135 cm eingestellt werden. Wird ein Druck von mehr als etwa 120 mmHg benötigt, muß ein Loch durch die Decke gebohrt werden, damit das Rohrsystem über dem Labortisch hoch genug werden kann.

Die US 5,051,352 beschreibt eine Perfusionseinrichtung für isolierte Organe, bei welcher eine Pumpe dem isolierten Organ über eine Versorgungsleitung Perfusat zuführt. In diese Versorgungsleitung ist eine Druckregelungseinheit eingeschaltet, durch welche gewährleistet wird, daß das isolierte Organg mit konstantem Druck perfundiert wird. Diese Druckregelungseinheit weist ein zylinderförmiges Gehäuse auf, innerhalb dessen eine Kugel durch eine Schraubenfeder abdichtend auf eine Öffnung gedrückt wird. In den zylinderförmigen Bereich des Gehäuses an der anderen Seite dieser Öffnung mündet sowohl die von der Pumpe kommende Versorgungsleitung für das Perfusat als auch die Zuführungsleitung zu dem isolierten Organ. Die von der Schraubenfeder auf die Kugel wirkende Kraft läßt sich durch Vorspannung der Schraubenfeder einstellen. Sobald nun der Druck des Perfusats in dem der Kugel abgewandten Gehäusebereich einen durch die Federvorspannung bestimmten Wert überschreitet, weicht die Kugel zurück und läßt durch die Öffnung Flüssigkeit austreten. Wenn der Druck wieder auf den gewünschten Wert abgesunken ist, drückt die Schraubenfeder die Kugel wieder abdichtend auf die Öffnung. Hierdurch wird eine Perfusion des isolierten Organs mit konstantem Druck ermöglicht. Diese Vorrichtung ist jedoch kompliziert aufgebaut, besteht aus vielen Einzelteilen und ist damit in der Herstellung teuer. Um eine zuverlässige Abdichtung zu erreichen, müssen Kugel und Ventilsitz sorgfältig aufeinander eingeschliffen sein. Ein besonderer Nachteil besteht jedoch darin, daß die Druckregelungseinheit primär keine Einstellung des Perfusionsdrucks, sondern lediglich eine Einstellung der auf die Spiralfeder wirkenden Kraft ermöglicht. Um eine Aussage über den physiologisch wichtigen Perfusionsdruck zu erhalten, muß entweder im Perfusionskreislauf selbst ein Manometer vorgesehen sein oder es muß auf irgendeine Weise die Vorspannungskraft der Schraubenfeder gemessen und mithilfe einer Tabelle in entsprechende Druckwerte umgerechnet werden.

Es besteht daher die Aufgabe, eine Perfusionseinrichtung bereitzustellen, die auf einfache und billige Weise die Einstellung des gewünschten Perfusionsdrucks ermöglicht und mit welcher der tatsächlich vorliegende Perfusionsdruck unmittelbar erfaßbar ist.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden anhand der Zeichnungen näher erläutert. Darin beziehen sich gleiche Bezugszahlen auf gleiche Teile. Es zeigen:
- **Fig. 1**: eine schematische Darstellung der Perfusionseinrichtung 1;
- **Fig. 2**: eine leicht modifizierte Ausführung der Druckregelungseinheit aus Figur 1.

Die in Figur 1 dargestellte Perfusionseinrichtung 1 besteht aus einem Reservoir 3, welches das Perfusat beinhaltet und über einen Flüssigkeitsdurchlauf beheizbar ist.

Die Heizflüssigkeit tritt über eine Öffnung 23 in die hohle Wandung 24 des Reservoirs 3 ein und verläßt diese wieder über eine Öffnung 25. An die Öffnungen 23 und 25 sind Schläuche angeschlossen, welche zu einer Pumpe mit Temperaturregler (nicht dargestellt) führen. Das Reservoir 3 kann auch eine Begasungsmöglichkeit (nicht dargestellt) zur Begasung des Perfusats mit Sauerstoff aufweisen. Das Perfusat wird von der Schlauchpumpe 4 über eine Saugleitung 5 aus dem Reservoir 3 abgesaugt und über die Versorgungsleitung 6, welche die Fortsetzung der Saugleitung 5 ist, einem Wärmeaustauscher 21 zugeführt. Der Wärmeaustauscher 21 weist, wie das Reservoir 3, eine Zulauföffnung 26 und eine Ablauföffnung 27 auf, an welche Schläuche angeschlossen sind, die zu einer Pumpe und einem Temperaturregler führen. Die Beheizung von Reservoir 3 und Wärmeaustauscher 21 kann durch eine Pumpe und einen Temperaturregler erfolgen, wenn beide Bauteile (3 und 21) in Serie angeordnet werden. Die Temperatur wird bei Warmblüterorganen üblicherweise auf einen Wert von 37°C eingestellt, kann aber auf jeden anderen physiologisch interessierenden Wert gebracht werden. Nach Verlassen des Wärmeaustauschers 21 führt die Versorgungsleitung 6 zur Organaufnahme mit dem isolierten Organ 2, an das sie angeschlossen ist. Üblicherweise wird die Versorgungsleitung 6 mit dem Arterieneingang des Organs 2 verbunden. Am Venenausgang dieses Organs 2 ist eine Ablaufleitung 7 angebracht, durch die das Perfusat nach der Durchströmung des Organs 2 das System verläßt. Unmittelbar vor dem Organ 2 weist die Versorgungsleitung 6 einen Anschluß für ein Manometer 22 bzw. einen Druckaufnehmer auf, an welchem der momentane Perfusionsdruck abgelesen werden kann.

In den Wärmeaustauscher 21 integriert ist ein Windkessel 32, welcher zugleich als Blasenfalle arbeitet. Die Windkesselfunktion ist insbesondere bei der Perfusion eines isolierten Herzens wichtig, um die Pulsation zu dämpfen. Der Druck innerhalb des Windkessels 32 läßt sich mit Hilfe einer daran angeschlossenen Spritze 33 einstellen. Die Verbindung zwischen Spritze 33 und Windkessel 32 läßt sich durch ein Ventil 34 herstellen bzw. blockieren. Der Windkessel 32 wirkt auch als Blasenfalle, d.h. eventuelle Gasblasen innerhalb der Versorgungsleitung 6 steigen darin nach oben und gelangen so nicht in das zu perfundierende Organ 2.

Von der Versorgungsleitung 6 zweigt, im Bereich zwischen Pumpe 4 und Wärmeaustauscher 21, eine Regelungsleitung 8 ab, welche in der Durchgangsbohrung 11 einer Platte 12 endet. Dieser Bereich ist in einer etwas anderen Ausführungsform in Figur 2 vergrößert dargestellt. Das Ende der Regelungsleitung 8 trägt die Bezugsziffer 9. Die resultierende Öffnung (bei 9) ist mit einer Membran 10 bedeckt, welche entlang ihres Randes abdichtend mit der Platte 12 verbunden ist. Die Membran 10 besteht vorzugsweise aus Gummi. Hinter der Membran 10 befindet sich ein Bauteil 28, welches den gleichen Durchmesser aufweist wie die Platte 12 und am Rand mit dieser verbunden ist. In dem Bereich, in dem die Platte 12 mit der Membran 10 bedeckt ist, weist das Bauteil 28 eine Ausnehmung auf, derart, daß sich auf der der Platte 12 abgewandten Seite der Membran 10 ein Hohlraum 15 bildet. Dieser Hohlraum 15 ist über eine Leitung 16, welche zum Teil im Bauteil 28 eingearbeitet sein kann, einer Druckbeaufschlagung zugänglich.

Zusätzlich zur Bohrung 11 weist die Platte 12 eine zweite Durchgangsbohrung 13 auf, in welcher eine Rücklaufleitung 14 endet. Die daraus resultierende Öffnung ist ebenfalls von der elastischen Membran 10 bedeckt. Der gemeinsame Hohlraum 15 befindet sich auf der der Platte 12 abgewandten Seite der Membran 10 im Bereich beider Bohrungen 11 und 13. Die Rücklaufleitung 14 führt zurück ins Reservoir 3.

Die Leitung 16 führt zu einer Spindelspritze 19, welche im wesentlichen aus einem Zylinder 17 und einem Kolben 18 besteht. Der Kolben 18 ist über eine Gewindestange 29 und ein Stellrad 30 in den Zylinder 17 einschraubbar, wodurch sich der Druck innerhalb des Zylinders 17, der Leitung 16 und damit des Hohlraums 15 veränderbar ist.

An den Zylinder 17 ist weiterhin ein Manometer 20 angeschlossen, an welchem der Druck innerhalb des Zylinders 17 ablesbar ist. Über ein Ventil 31 ist der Innenraum des Zylinders 17 zum Druckausgleich mit der Umgebung verbindbar.

Die Perfusionsapparatur kann sowohl unter Konstant-Fluß- Bedingung als auch unter Konstant-Druck-Bedingung eingesetzt werden. Zu Messungen bei konstantem Fluß wird der Druck im Innenraum des Zylinders 17 und damit im Hohlraum 15 durch möglichst weites Einschrauben des Kolbens 18 sehr hoch gewählt, was zu einem dauernden Verschluß des Endes 9 der Regelungsleitung 8 durch die Membran 10 führt. Der gewünschte Fluß kann nun an der Pumpe 4 eingestellt werden, der aktuelle Perfusionsdruck am Organ 2 läßt sich am Manometer 22 ablesen.

Beim Arbeiten unter Konstant-Fluß-Bedingung besteht immer die Gefahr, daß der Perfusionsdruck, beispielsweise bei zu hoch eingestellter Förderleistung der Pumpe 4, auf unphysiologisch hohe Werte ansteigt und infolgedessen das perfundierte Organ 2 geschädigt wird. Dies kann mit der beschriebenen Perfusionsapparatur dadurch wirksam verhindert werden, daß der Druck im Hohlraum 15 durch Einstellen an der Spindelspritze 19 so hoch eingestellt wird, wie es das Organ 2 gerade noch verträgt, ohne Schaden zu nehmen. Übersteigt jetzt der sich einstellende Perfusionsdruck in der Regelleitung 8 den Druck im Hohlraum 15, dann weicht die Membran 10 zurück und gibt dem Perfusat den Weg von der Bohrung 9 zur Rücklaufleitung 14 frei. Die Reglereinrichtung wirkt in diesem Falle als Druckbegrenzer.

Zum Arbeiten bei konstantem Druck, was physiologisch meist günstiger ist, wird die Pumpe 4 auf ausreichend hohe Förderleistung geschaltet und der Druck im Zylinder 17 durch Herausdrehen des Kolbens 18 über Gewindestange 29 und Drehgriff 30 auf den gewünschten Perfusionsdruck gebracht. Dieser kann am Manometer 20 abgelesen werden. Sobald nun in der Versorgungsleitung 6, und damit in der Regelungsleitung 8, ein höherer als der eingestellte Druck vorliegt, weicht die Membran 10 in den Hohlraum 15 zurück, wodurch die Regelungsleitung 8 mit der Rücklaufleitung 14 verbunden wird. Überschüssiges Perfusat wird über die Rücklaufleitung 14 wieder in das Reservoir 3 geleitet. Zur Kontrolle kann der unmittelbare Perfusionsdruck am Manometer 22 nach wie vor abgelesen werden. Änderungen des Organwiderstands und damit des Durchflusses führen nicht zu Druckänderungen, da der Druck durch die beschriebene Regelung konstant gehalten wird.

In einer anderen, nicht dargestellten, Ausführungsform kann die Regelungsleitung 8 nach dem Wärmeaustauscher 21 von der Versorgungsleitung 6 abzweigen. Falls der _{"}Venendruck", also der Perfusionsdruck nach dem Organ 2 konstant gehalten werden soll, kann die Regelungsleitung 8 auch von der Ablaufleitung 7 abzweigen. Es können auch zwei Regelungsleitungen 8 vorhanden sein, wobei eine der beiden Regelungsleitungen vor dem isolierten Organ 2, die andere danach abzweigt. In diesem Falle sind zwei komplette Regeleinheiten, jeweils eine für jede Regelungsleitung, einzusetzen.

In einer weiteren, nicht dargestellten, Ausführungsform ist die Regelungsleitung 8 nicht mit einer Membran 10 bedeckt, sondern wird von einem Stopfen verschlossen. Dieser Stopfen wird durch die von einer Schraubenfeder erzeugte Kraft in die Öffnung der Regelungsleitung 8 gedrückt. Übersteigt der Druck in der Regelungsleitung 8 einen bestimmten Wert, weicht der Stopfen gegen die Kraft der Feder zurück, wodurch die Öffnung der Regelungsleitung 8 freigegeben wird und überschüssiges Perfusat auslaufen kann. Auch diese Variante kann so ausgebildet werden, daß das auslaufende Perfusat wieder in das Reservoir zurückgeführt wird.

Gegenüber den bekannten Perfusionseinrichtungen zum Arbeiten bei konstantem Druck, welche mit den eingangs diskutierten hohen Säulen arbeiten, findet die erfindungsgemäße Perfusionseinrichtung 1 auf jedem Labortisch Platz. Sie läßt sich schnell und einfach von Konstant-Fluß- auf Konstant-Druck- Betrieb umstellen, wobei der Perfusionsdruck im Bereich zwischen 0 und 300 mmHg durch einfaches Drehen an der Spindelspritze 19 justierbar ist und am Zeigermanometer 20 abgelesen werden kann. Leistet die Pumpe 4 mehr, als in das Organ 2 abfließt, fließt das nicht benötigte Perfusat über die Rücklaufleitung 14 ins Reservoir 3 zurück.

## Patentansprüche

1. Perfusionseinrichtung (1) für isolierte Organe (2), umfassend mindestens ein Reservoir (3) für das Perfusat sowie eine Pumpe (4), welche das Perfusat durch eine Saugleitung (5) aus dem Reservoir (3) saugt und durch eine Versorgungsleitung (6) in das isolierte Organ (2) pumpt, wobei von einer der Pumpe (4) nachgeschalteten Leitung (6,7) eine Regelungsleitung (8) abzweigt, gegen deren Ende (9) abdichtend ein Verschlußteil mit einer definierten Kraft gepreßt ist, welches bei Überschreiten eines bestimmten Drucks in der Regelungsleitung (8) zurückweicht und damit den Austritt von Perfusat aus dem Ende (9) der Regelungsleitung (8) erlaubt, **dadurch gekennzeichnet**, daß die Regelungsleitung (8) in einer Durchgangsbohrung (11) einer Platte (12) endet (9), die resultierende Öffnung mit einer, das Verschlußteil bildenden Membran (10) bedeckt ist und sich auf der der Platte (12) abgewandten Seite der Membran (10) ein Hohlraum (15) befindet, dessen Innendruck die definierte Kraft auf die Membran (10) erzeugt.

2. Perfusionseinrichtung nach Anspruch 1, **dadurch gekennzeichnet**, daß die der Pumpe (4) nachgeschaltete Leitung (6, 7) die Versorgungsleitung (6) ist.

3. Perfusionseinrichtung nach Anspruch 1 oder 2, **dadurch gekennzeichnet**, daß die Platte (12) eine zweite Durchgangsbohrung (13) aufweist, in welcher eine Rücklaufleitung (14) endet, die daraus resultierende Öffnung ebenfalls von der elastischen Membran (10) bedeckt ist, die Membran (10) entlang ihres Randes abdichtend mit der Platte (12) verbunden ist und so bei Überschreiten eines bestimmten Drucks in der Regelungsleitung (8) eine Verbindung zwischen Regelungsleitung (8) und Rücklaufleitung (14) entsteht.

4. Perfusionseinrichtung nach Anspruch 3, **dadurch gekennzeichnet**, daß die Rücklaufleitung (14) zum Reservoir (3) führt.

5. Perfusionseinrichtung nach einem der voranstehenden Ansprüche, **dadurch gekennzeichnet**, daß der Hohlraum (15) über eine Leitung (16) mit einem Zylinder (17) verbunden ist, dessen Innendruck mit einem verschiebbaren Kolben (18) einstellbar ist.

6. Perfusionseinrichtung nach Anspruch 5, **dadurch gekennzeichnet**, daß das Zylinder/Kolben-System (17, 18) eine Spindelspritze (19) ist.

7. Perfusionseinrichtung nach einem der voranstehenden Ansprüche, **dadurch gekennzeichnet**, daß ein Manometer (20) zur Anzeige des Drucks im Hohlraum (15) vorhanden ist.

8. Perfusionseinrichtung nach einem der voranstehenden Ansprüche, **dadurch gekennzeichnet**, daß die Membran (10) aus Gummi besteht.

9. Perfusionseinrichtung nach einem der voranstehenden Ansprüche, **dadurch gekennzeichnet**, daß in die Versorgungsleitung (6) ein Wärmeaustauscher (21) eingebaut ist und/oder das Reservoir (3) temperiert ist.

10. Perfusionseinrichtung nach einem der voranstehenden Ansprüche, **dadurch gekennzeichnet**, daß in der Versorgungsleitung (6) ein Windkessel (32) eingebaut ist.

11. Perfusionseinrichtung nach einem der voranstehenden Ansprüche, **dadurch gekennzeichnet**, daß in der Versorgungsleitung (6) eine Blasenfalle eingebaut ist.

12. Perfusionseinrichtung nach einem der Ansprüche 10 oder 11, **dadurch gekennzeichnet**, daß Windkessel (32) und/oder Blasenfalle im Wärmeaustauscher (21) integriert sind.

13. Perfusionseinrichtung nach einem der voranstehenden Ansprüche, **dadurch gekennzeichnet**, daß das Reservoir (3) eine Begasungsvorrichtung für das Perfusat aufweist.

14. Perfusionseinrichtung nach einem der voranstehenden Ansprüche, **dadurch gekennzeichnet**, daß an der Versorgungsleitung (6) unmittelbar vor dem Organ (2) ein Manometer (22) zur Messung des Perfusionsdrucks angebracht ist.

15. Perfusionseinrichtung nach einem der voranstehenden Ansprüche, **dadurch gekennzeichnet**, daß die Pumpe (4) eine Schlauchpumpe ist.

## Claims

1. A perfusion device (1) for isolated organs (2), comprising at least
one reservoir (3) for the perfusate as well as a pump (4) which sucks the perfusate from the reservoir (3) through a suction line (5) and pumps it into the isolated organ through a supply line (6), whilst a regulation line (8) branches off from a line (6, 7) connected after the pump (4) and has pressed at a definite force against the end (9) of it to make a seal a closure part which upon a certain pressure in the regulation line (8) being exceeded falls back and thereby allows perfusate to leave from the end (9) of the regulation line (8), characterized in that the regulation line (8) ends (9) in a passage (11) drilled through a plate (12) in which the resulting opening is covered over by a membrane (10) which forms the closure part whilst at the side of the membrane (10) facing away from the plate (12) there is a cavity (15) the pressure in which generates the definite pressure upon the membrane (10).

2. A perfusion device as in Claim 1, characterized in that
the line (6, 7) connected after the pump (4) is the supply line (6).

3. A perfusion device as in Claim 1 or 2, characterized in that
the plate (12) exhibits a second passage (13) drilled through it, in which a return line (14) terminates, and the opening resulting from that is likewise covered over by the elastic membrane (10), the membrane (10) being connected along its edge to the plate (12) to make a seal, and thus upon a certain pressure being exceeded in the regulation line (8) a connection arises between the regulation line (8) and the return line (14).

4. A perfusion device as in Claim 3, characterized in that
the return line (14) leads to the reservoir (3).

5. A perfusion device as in one of the preceeding Claims,
characterized in that the cavity (15) is connected via a line (16) to a cylinder (17) in which the pressure may be set by a displaceable piston (18).

6. A perfusion device as in Claim 5, characterized in that the cylinder/piston system (17, 18) is a spindle syringe (19).

7. A perfusion device as in one of the preceeding Claims, characterized in that there is a manometer (20) for indicating the pressure in the cavity (15).

8. A perfusion device as in one of the preceeding Claims, characterized
in that the membrane (10) consists of rubber.

9. A perfusion device as in one of the preceeding Claims, characterized
in that a heat-exchanger (21) is built into the supply line (6) and/or the reservoir (3) is temperature-controlled.

10. A perfusion device as in one of the preceeding Claims, characterized
in that an air chamber (32) is built into the supply line (6).

11. A perfusion device as in one of the preceeding Claims, characterized
in that a bubble trap is built into the supply line (6).

12. A perfusion device as in one of the Claims 10 or 11, characterized
in that the air chamber (32) and/or bubble trap are integrated into the heat-exchanger (21).

13. A perfusion device as in one of the preceeding Claims, characterized
in that the reservoir (3) exhibits a gasifying device for the perfusate.

14. A perfusion device as in one of the preceeding Claims, characterized
in that a manometer (22) is fitted to the supply line (6) directly before the organ (2) for the measurement of the perfusion pressure.

15. A perfusion device as in one of the preceeding Claims, characterized
in that the pump (4) is a stricture pump.

## Revendications

1. Dispositif de perfusion (1) pour organes isolés (2), comprenant au moins un réservoir (3) pour le perfusat ainsi qu'une pompe (4), laquelle aspire le perfusat du réservoir (3) à travers une conduite d'aspiration (5) et le refoule dans l'organe isolé (2) à travers une conduite d'alimentation (6), tandis que, d'une conduite (6, 7) montée en aval de la pompe (4), diverge une conduite de régulation (8) contre l'extrémité (9) de laquelle est serré, sous une force définie, un élément bouchon, lequel se déserve en cas de dépassement d'une pression déterminée dans la conduite de régulation (8) et permet ainsi que le perfusat s'échappe de l'extrémité (9) de la conduite de régulation (8), caractérisé en ce que la conduite de régulation (8) s'achève au point (9) dans un perçage passant (11) d'une plaque (12), que l'ouverture qui en résulte étant recouverte d'une membrane (10) constituant l'élément bouchon et que, sur la face de la plaque (12) opposée à la membrane (10), se trouve une cavité dont la pression intérieure génère la force définie qui s'exerce sur la membrane (10).

2. Dispositif de perfusion selon la revendication 1, caractérisé en ce que la conduite (6, 7) branchée en aval de la pompe (4) est la conduite d'alimentation (6).

3. Dispositif de perfusion selon la revendication 1 ou 2, caractérisé en ce que la plaque (12) présente un deuxième perçage passant (13), dans lequel aboutit une conduite de retour (14), l'ouverture qui en résulte étant également recouverte par la membrane élastique (10), que la membrane (10) étant reliée, le long de son bord, de manière étanche à la plaque (12) et que de cette manière en cas de dépassement d'une pression déterminée dans la conduite de régulation (8), se produit une liaison entre cette conduite de régulation (8) et la conduite de retour (14).

4. Dispositif de perfusion selon la revendication 3, caractérisé en ce que la conduite de retour (14) conduit vers le réservoir (3).

5. Dispositif de perfusion selon l'une des revendications précédentes, caractérisé en ce que la cavité (15) est reliée à travers une conduite (16) à un cylindre (17), dont la pression intérieure est régulable à l'aide d'un piston mobile (18).

6. Dispositif de perfusion selon la revendication 5, caractérisé en ce que le système cylindre/piston (17, 18) est une seringue (19).

7. Dispositif de perfusion selon l'une des revendications précédentes, caractérisé par la présence d'un manomètre (20) pour l'indication de la pression qui règne dans la cavité (15).

8. Dispositif de perfusion selon l'une des revendications précédentes, caractérisé en ce que la membrane (10) est constituée en caoutchouc.

9. Dispositif de perfusion selon l'une des revendications précédentes, caractérisé en ce que, dans la conduite d'alimentation (6), est incorporé un échangeur de chaleur (21) et/ou que le réservoir (3) est maintenu à température régulée.

10. Dispositif de perfusion selon l'une des revendications précédentes, caractérisé en ce que, dans la conduite d'alimentation (6), est incorporée une cloche à vent (32).

11. Dispositif de perfusion selon l'une des revendications précédentes, caractérisé en ce que, dans la conduite d'alimentation (6), est incorporé un piège à bulles.

12. Dispositif de perfusion selon la revendication 10 ou 11, caractérisé en ce que la cloche à vent (32) et/ou le piège à bulles sont intégrés dans l'échangeur de chaleur (21).

13. Dispositif de perfusion selon l'une des revendications précédentes, caractérisé en ce que le réservoir (30) comporte un dispositif d'injection de gaz dans le perfusat.

14. Dispositif de perfusion selon l'une des revendications précédentes, caractérisé en ce que, sur la conduite d'alimentation (6), est fixé, immédiatement avant l'organe (2), un manomètre (22) pour mesurer la pression de perfusion.

15. Dispositif de perfusion selon l'une des revendications précédentes, caractérisé en ce que la pompe (4) est une pompe tubulaire.
